# EUROPÄISCHE PATENTSCHRIFT

(11) **EP 3 243 807 B1**
(45) Veröffentlichungstag und Bekanntmachung des Hinweises auf die Patenterteilung: **14.11.2018**
(21) Anmeldenummer: 16169271.0
(22) Anmeldetag: 12.05.2016
(51) Int. Cl.: C04B 40/00, C08J 3/03, C04B 103/56, C04B 111/34, C04B 111/60

(54) **VERWENDUNG WÄSSRIGER EMULSIONEN AUF BASIS VON PROPYLETHOXYSILANOLIGOMEREN ALS ZUSATZ IN HYDRAULISCH ABBINDENDEN ZEMENTMISCHUNGEN ZUR MINDERUNG DES SCHWUNDVERHALTENS**
USE OF AQUEOUS EMULSIONS BASED ON PROPYLETHOXYSILANE OLIGOMERS AS AN ADDITIVE IN HYDRAULICALLY SETTING CEMENT MIXES FOR REDUCING SHRINKAGE
UTILISATION D'ÉMULSIONS AQUEUSES À BASE D'OLIGOMÈRES DE PROPYLETHOXYSILANE EN TANT QU'ADDITIF DANS DES MÉLANGES DE CIMENT FAISANT PRISE HYDRAULIQUEMENT DESTINÉES À RÉDUIRE LE RETRAIT

(43) Veröffentlichungstag der Anmeldung: 15.11.2017
(73) Patentinhaber: Evonik Degussa GmbH, 45128 Essen (DE)
(72) Erfinder: Schottler, Michael, 65474 Bischofsheim (DE); Fliedner, Christine, 53127 Bonn (DE); Röhrig, Thomas, 79618 Rheinfelden (DE)

(56) Entgegenhaltungen:
- EP-A2- 1 205 505
- WO-A1-2004/089846
- WO-A1-2006/081891
- KR-A- 20100 044 494
- SU-A1- 833 787

## Beschreibung

Die vorliegende Erfindung betrifft die Verwendung spezieller wässriger Emulsionen auf Basis von Propylethoxysilanoligomeren als Zusatz in hydraulisch abbindenden Zementmischungen, wie Beton, Estrich oder Mörtel, zur Minderung des Schwundverhaltens.

Unter hydraulisch abbindenden Zementmischungen versteht der Fachmann in der Regel Mörtel, Estrich und Beton. Diese Mischungen enthalten als primäres Bindemittel Zement und weiterhin Zuschlagstoffe - bevorzugt, aber nicht ausschließlich - umfassend Sand, Kies, Kalkstein oder Kreide, mit unterschiedlicher maximaler Partikelgröße und -verteilung. In der Regel werden hydraulisch abbindende Zementmischungen als Mörtel bezeichnet, wenn die maximale Partikelgröße der Zuschlagsstoffe unter 4 mm, für Estriche bis zu 8 mm und bei Betonen größer 8 mm beträgt. Ungeachtet dessen, enthalten diesbezügliche hydraulisch abbindende Zementmischungen mit Hinblick auf ihre Applikation Wasser und können ferner weitere Additive, Zusatzmittel und/oder weitere hydraulisch wirkende mineralische Zusätze, wie beispielsweise - aber nicht ausschließlich - Puzzolane oder Flugasche, für spezielle Anwendungen enthalten. Wässrige Emulsionen von Alkoxysilanen und/oder Organopolysiloxanen sowie gegebenenfalls weiteren Einsatzstoffen, diverse Herstellungswege und deren verschiedenen Applikationsmöglichkeiten sind in einer Vielzahl von Druckschriften beschrieben.

So werden Emulsionen von Alkoxysilanen und/oder Organopolysiloxanen insbesondere zur Hydrophobierung mineralischer Baustoffe sowie Holz, als Haftvermittler, als Korrosionsschutzmittel, beispielsweise für Stahlbeton, sowie in Anstrich- oder Imprägniermittel für Baustoffe verwendet: EP 0442098, US 5,746,810, US 6,103,001, WO 00/3406, EP 0761724, US 5,591,818, EP 0590270, US 5,073,195, US 3,734,763, CN 103923561, CN 103964736, US 6,174,461, EP 0957071, EP 1308428, WO 2006/081891, WO 2006/081892, WO 2008/128819, EP 0616989, EP 0538555, EP 0819665, WO 2000/046167, u.v.m.

EP 1236702 betrifft Wasserglas-haltige Baustoffmischungen für die Herstellung von chemikalienbeständigen Mörteln, wobei u.a. auch Hydrophobierungsmittel zugesetzt werden können.

Aus EP 2429968 sind alkaliaktivierte Alumosilikatbindemittel zur Schwundreduktion zu entnehmen, die mindestens eine organische Verbindung aus der Reihe der Amine und/oder deren Salze enthalten, wobei u. a. der Einsatz von Aminoalkoholen ausgeschlossen wird.

WO 2004/089846 offenbart die Verwendung von Siloxanen als Zusatz in hydraulisch abbindenden Zementmischungen zur Minderung des Schwundverhaltens. Bei der Herstellung von Formteilen bzw. -körper, beispielsweise Betondecken, Betonwände, Brücken, aus zementbasierten Baustoffmischungen sind bei der Aushärtung Risse zu vermeiden und diesbezüglich (Dehn-)Fugen zum Ausgleich vorzusehen. So ist man bemüht das Schwundverhalten solcher Baustoffmischungen zu minimieren.

Aufgabe der vorliegenden Erfindung war es, eine wässrige Emulsion von funktionellen Alkylalkoxysilanen und deren kondensierten Alkylalkoxysilanoligomeren (nachfolgend auch kurz Oligomere bzw. Oligomerengemisch genannt) bereitzustellen, die durch Zusatz bei der Herstellung von hydraulisch abbindenden Zementmischungen, wie Beton, Estrich bzw. Mörtel, einen geringeren Schwund bis hin zur Aushärtung bewirkt.

Gelöst wird die Aufgabe gemäß den Merkmalen des hier vorliegenden Anspruchs 1. Merkmale zu bevorzugten Ausführungsformen der vorliegenden Erfindung sind den jeweils rückbezogenen Unteransprüchen zu entnehmen.

So wurde in überraschender Weise gefunden, dass man eine wässrige Emulsion, die ein Propylethoxysilanoligomeren-Gemisch oder ein Gemisch aus einem Propylethoxysilanoligomeren-Gemisch und Octyltriethoxysilan (OCTEO), wobei Propylethoxysilanoligomeren-Gemisch und Octyltriethoxysilan in einem Gewichtsverhältnis von 3 zu 1 bis 1 zu 3 stehen, mindestens einen Emulgator oder ein Emulgatorsystem, mindestens einen Gehalt an einem 2-Aminoethanol, vorzugsweise einem N-alkylsubstituierten 2-Aminoethanol, besonders bevorzugt N,N-Diethyl-2-aminoethanol, und Wasser enthält, als Zusatz bei der Herstellung von hydraulisch abbindenden Zementmischungen [nachfolgend auch kurz Zementmischung(en) genannt], insbesondere ausgewählt aus der Reihe Mörtel, Estrich sowie Beton, beispielsweise Gasbeton, Stahlbeton, Unterwasserbeton, Textilfaserbeton, Betoninstandsetzungsmörtel, Mörtel, 2-K-Komponenten-Mörtel, Estrich, -um nur einige zu nennen-, zur Minderung des Schwundverhaltens vorteilhaft verwenden kann. Dabei diente Normmörtel als Modellsubstanz, vgl. die nachfolgend angeführten Anwendungsbeispiele.

Die Lösung der erfindungsgemäßen Aufgabe schließt weiter auch eine besondere Wirtschaftlichkeit bezüglich der Ölphase bei Herstellung spezieller Emulsionen ein, da an Stelle des aufwendig herzustellenden, d. h. teuren Silanoligomeres anteilig preisgünstigeres monomeres Alkylalkoxysilan in Form von OCTEO vorteilhaft eingesetzt werden kann.

Gegenstand der vorliegenden Erfindung ist somit die Verwendung einer wässrigen Emulsion, die ein Propylethoxysilanoligomeren-Gemisch oder ein Gemisch aus einem Propylethoxysilanoligomeren-Gemisch und Octyltriethoxysilan in einem Gewichtsverhältnis von 3 zu 1 bis 1 zu 3, mindestens einen Emulgator oder ein Emulgatorsystem, mindestens einen Gehalt an einem 2-Aminoethanol und Wasser enthält,
als Zusatz bei der Herstellung von hydraulisch abbindenden Zementmischungen zur Minderung des Schwundverhaltens.

Darüber hinaus wird ausdrücklich darauf hingewiesen, dass die Offenbarung zum Gegenstand der vorliegenden Erfindung alle Kombinationen von einzelnen Merkmalen der vorliegenden bzw. nachfolgenden Beschreibung der Erfindung und der Patentansprüche 1 bis 11 einschließt.

Die Herstellung von Propylethoxysilanoligomeren-Gemischen (nachfolgend auch kurz als Propylethoxysilanoligomere bezeichnet), insbesondere von n- bzw. i-Propylethoxysilanoligomeren, kann beispielsweise gemäß EP 0 814 110, EP 1 205 481 bzw. EP 1 205 505 erfolgen.

Die Herstellung einer erfindungsgemäß verwendeten wässrigen Emulsion, die mindestens als Ölphase ein Propylethoxysilanoligomeren-Gemisch oder ein Gemisch aus Propylalkoxysilanoligomer-Gemische und Octyltriethoxysilan und ein 2-Aminoethanol bzw. N-alkylsubstituiertes 2-Aminoethanol, mindestens einen Emulgator und Wasser enthält, kann beispielsweise -aber nicht ausschließlich- durch Vormischen der Bestandteile und anschließendes Emulgieren erfolgen (siehe dazu u. a. auch WO 2006/081891, WO 2006/081892 WO 2008/128819 sowie EP 0538555), wobei die Zugabe des 2-Aminoethanols bzw. N-alkylsubstituierten 2-Aminoethanols sowohl in der Grundmischung vor als auch nach der Emulgierung erfolgen kann.

Eine erfindungsgemäß verwendete Emulsion weist bevorzugt einen Gehalt an Propylethoxysilanoligomeren-Gemisch von 20 bis 85 Gew.-%, bezogen auf das Gesamtgewicht der Emulsion, auf, wobei die Ölphase in Summe 40 bis 85 Gew.-%, insbesondere 41 bis 82 Gew.-%, bezogen auf das Gesamtgewicht der Emulsion, beträgt.

Dabei sind insbesondere Propylethoxysilanoligomeren-Gemische bevorzugt, die Oligomere der Formel (I) 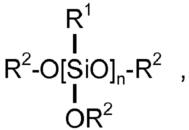 enthalten und die Gruppen R¹ unabhängig voneinander für n- sowie i-Propyl und die Gruppen R² für Ethyl stehen und n den Oligomerisierungsgrad als mit 2 bis 20 bestimmt.

Ferner sind erfindungsgemäß verwendete Emulsionen bevorzugt, die 0,1 bis 1 Gew.-%, vorzugsweise 0,25 bis 0,75 Gew.-%, bezogen auf Gesamtgewicht der Emulsion, mindestens eines 2-Aminoethanols der allgemeinen Formel (II)

HO-CH₂-CH₂-NR³₂ (II),

worin Gruppen R³ gleich oder verschieden sind und unabhängig voneinander für
Wasserstoff, Methyl sowie Ethyl stehen,
enthalten, insbesondere bevorzugt ist N,N-Diethyl-2-aminoethanol.

Auch kann man den Gehalt an Oligomer- bzw. Silan/Oligomer-Ölphase durch Zusatz eines geeigneten organischen Lösemittels, beispielsweise - aber nicht ausschließlich - aliphatische sowie aromatische Kohlenwasserstoffe mit einem Siedepunkt oberhalb der Raumtemperatur, wie C₆- bis C₁₂-Alkane, Benzin, Waschbenzin, Diesel, Kerosin, Toluol, Xylol, Alkohole bzw. Polyole, wie Pentanol, Hexanol, Oktanol, Nonanol, Isononanol, Glycerin, Ether, Ester, Aldehyde, Ketone oder ein Gemisch aus mindestens zwei der zuvor genannten organischen Lösemittel, zusätzlich einstellen.

Die erfindungsgemäß verwendeten Emulsionen enthalten mindestens einen Emulgator, vorzugsweise ein Emulgatorsystem aus zwei oder mehr Emulgatoren. Der oder die Emulgatoren können in Mengen von 0,02 bis 3 Gew.-%, bezogen auf Gesamtgewicht der Emulsion, vorhanden sein.

Geeignete Emulgatoren bzw. Emulgatorsysteme, wobei Emulgatorsysteme auf mindestens zwei der nachfolgenden Emulgatoren beruhen, sind beispielhaft ausgewählt aus Alkylsulfaten mit C₈-C₁₈-Alkyl, Alkyl- und Alkarylethersulfaten mit C₈-C₁₈-Alkyl im hydrophoben Rest und mit 1 bis 40 Ethylenoxid (EO)- bzw. Propylenoxid (PO)-Einheiten, Alkylsulfonate mit C₈-C₁₈-Alkyl, Natriumlaurylsulfat (C₁₂-C₁₆), Alkarylsulfonate mit C₈-C₁₈-Alkyl, Halbester der Sulfobernsteinsäure mit einwertigen Alkoholen oder Alkylphenolen mit 5 bis 15 Kohlenstoffatomen, Alkali- und Ammoniumsalze von Carbonsäuren mit 8 bis 20 Kohlenstoffatomen im Alkyl-, Aryl-, Alkaryl- oder Aralkylrest, Alkyl- und Alkarylphosphate mit 8 bis 20 Kohlenstoffatomen im organischen Rest, Alkylether- bzw. Alkaryletherphosphate mit 8 bis 20 Kohlenstoffatomen im Alkyl- bzw. Alkarylrest und 1 bis 40 EO-Einheiten, Alkylpolyglykolether und Alkarylpolyglykolether mit 8 bis 40 EO-Einheiten und C₈-C₂₀-Kohlenstoffatomen in den Alkyl- oder Arylresten, Ethylenoxid/Propylenoxid (EO/PO)-Blockcopolymer mit 8 bis 40 EO- bzw. PO-Einheiten, Additionsprodukte von Alkylaminen mit C₈-C₂₂-Alkylresten mit Ethylenoxid oder Propylenoxid, Alkylpolyglykoside mit linearen oder verzweigten gesättigten oder ungesättigten C₈-C₂₄-Alkylresten und Oligoglykosidresten mit 1 bis 10 Hexose- oder Pentoseeinheiten, siliciumfunktionelle Tenside oder Mischungen dieser Emulgatoren. Beispiele für siliciumfunktionelle Tenside sind solche der allgemeinen Formeln

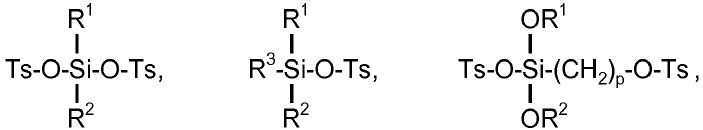

in denen R¹ und R² gleich oder verschieden sind, geradkettig oder verzweigtes C₁-C₂₀-Alkyl, vorzugsweise C₁-C₁₀-Alkyl, Phenyl ist, R³ ist C₁-C₁₀-Alkyl, p ist eine ganze Zahl von 0 bis 3 und Ts ein Tensidrest ist ausgewählt aus -(CH₂CH₂-O)ₙ-R⁴, 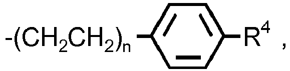 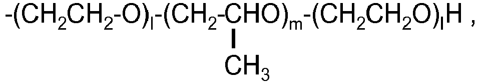 in denen n eine ganze Zahl von 3 bis 15, m eine ganze Zahl von 3 bis 50 und I eine ganze Zahl von 3 bis 25 ist, R⁴ H, C₁-C₂₀-Alkyl, C₂-C₃₆-Alkenyl, C₅-C₈-Cycloalkyl, C₇-C₃₆-Aralkyl ist (nachfolgend auch kurz "siliciumfunktionelles Tensid" oder "siliciumfunktioneller Emulgator Typ A" genannt).

Besonders bevorzugt ist eine Kombination von Alkylsulfaten mit C₈-C₁₈-Alkylresten, beispielsweise von Laurylsulfaten, und siliciumfunktionellen Tensiden der Formel 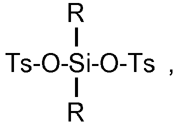 in der R Methyl, Ethyl, Methoxy oder Ethoxy ist und der Tensidrest -(CH₂CH₂-O)₁₀C₁₃H₂₇ oder 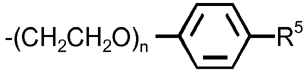 ist, wobei in der Formel n eine ganze Zahl von 5 bis 15 ist und R⁵ ein geradkettig oder verzweigter C₆-C₁₀-Alkylrest ist. Besonders geeignet ist ein Tensid der vorstehenden Formeln in denen R = CH₃, n = 1 bis 30 und R⁵= Isononyl sind. Dieses Tensid wird nachfolgend als Tensid A bezeichnet.

Zusätzlich zu dem (den) Silan-basierten Wirkstoff(en), Wasser und dem mindestens einen Emulgator können die erfindungsgemäß verwendeten wässrigen Emulsionen noch übliche Hilfsstoffe enthalten, ausgewählt aus anorganischen oder organischen Säuren, Fettsäuren, Basen, Puffersubstanzen, Fungiziden, Bakteriziden, Algiziden, Mikrobioziden, Geruchsstoffen, Korrosionsinhibitoren, Konservierungsmitteln, Rheologiehilfsmitteln, wie z. B. pyrogene Kieselsäure oder Bentonite, Abperlhilfsmittel, wie z. B. Wachse, Fluorpolymere, hydrophobe pyrogene Kieselsäuren, solche auf Basis von reaktiven Organosiloxanen, Siliconharze, Katalysatoren, wie z. B. organische Zinn- Titan- oder Zirkonverbindungen, wie Dibutylzinndilaurat, Titan- oder Zirkonalkoxide (z. B. Tetrabutyltitanat). Die Hilfsstoffe können in Mengen von 0,005 bis 10 Gew.-%, bezogen auf Gesamtgewicht der Emulsion, vorhanden sein.

Die Einstellung des gewünschten pH-Werts kann zusätzlich durch Zugabe von Säure oder alkalischen Verbindungen oder durch gängige Puffersysteme, wie NaHCO₃, Natriumacetat/Essigsäure oder Alkaliphosphate, erfolgen und mittels üblicher Methoden, wie sie dem Fachmann bekannt sind, bestimmt werden, beispielsweise mittels pH-Papier oder pH-Stäbchen (Fa. Merck) oder pH-Elektrode. So weist eine erfindungsgemäß verwendete Emulsion bevorzugt einen pH-Wert von 8 bis 12 auf.

Ferner setzt man beim der Herstellung erfindungsgemäß verwendeter Emulsionen vorteilhaft mindestens einen weiteren Zusatzstoff ausgewählt aus der Reihe Konservierungsmittel, wie CIT bzw. MIT (CIT = Chlormethylisothiazolinon; MIT = Methylisothiazolinon), Antikorrosionshilfsmittel, Abperlhilfsmittel, wie reaktives Siloxanharz bzw. Organopolysiloxan, Rheologiehilfsmittel, Natriumhydrogencarbonat ein.

Im Allgemeinen verwendet man eine vorliegende Emulsion erfindungsgemäß in hydraulisch abbindenden Zementmischungen, indem man während der Herstellung eines applikationsfähigen Mörtels, Estrichs bzw. Betons in einem Mischer die Emulsion in einem Zug oder portionsweise zusetzt und durch Mischen weitgehend gleichmäßig einarbeitet, alternativ kann man die Emulsion zusammen mit dem Anmachwasser vorlegen bzw. zusetzt.

Erfindungsgemäß setzt man eine der vorliegenden Emulsionen zu 0,1 bis 5 Gew.-%, vorzugsweise 0,5 bis 2 Gew.-%, bezogen auf die in der Zementmischung enthaltene Zementmenge, ein, wobei die Zementmischung bevorzugt eine Betonmischung ist.

So zeichnet sich eine erfindungsgemäß verwendete Emulsion durch einen verminderten Schwund während bzw. bis zur Aushärtung von hydraulisch abbindenden Zementmischungen, d.h. bei Mörtel, Estrich sowie insbesondere bei Beton, wie Luft- bzw. Gasbeton, (Unter-)Wasserbeton, Stahlbeton, Textilfaserbeton, vorteilhaft aus. Beispielsweise wirkt sich eine erfindungsgemäße Verwendung hinsichtlich erforderlicher Dehnungsfugen bei größeren Betonflächen vorteilhaft aus, zu Beispiel bei Brücken; so kann man den Schwund auf einer Länge von 100 m nach 28 Tagen von 7,5 cm Schwund bei Normmörtel auf 6,6 cm bei einer erfindungsgemäßer Verwendung verringern, was auch bei statischen und wirtschaftlichen Überlegungen Beachtung findet. Ferner hat ein geringeres Schwundverhalten bei Zementmischungen auch den Vorteil, dass es in solchen Systemen zu geringeren inneren Spannungen kommt und so die Neigung zu Rissbildung und Haftungsverlust bis hin zu Abplatzungen deutlich gemindert werden kann.

Besonders vorteilhaft ist die erfindungsgemäße Verwendung vorliegender spezieller Emulsionen als Zusatz in hydraulisch abbindenden Zementmischungen, insbesondere in Beton, Gasbeton, Unterwasserbeton, Stahlbeton, Textilbeton bzw. Textilfaserbeton, Estrich, Mörtel, 2-K-Komponenten-Mörtel, Betoninstandsetzungsmörtel -um nur einige Beispiele zu nennen-. Im Falle eines 2-K-Komponenten-Mörtels wird die zweite Komponente in flüssiger Form zur ersten Komponente (in der Regel einer Trockenmörtelmischung) direkt vor der Applikation zugegeben, es können sich hierbei - aber nicht ausschließlich - um geeignete Epoxidharze zur Erhöhung der Chemikalienresistenz oder dem Fachmann bekannte Polymerlatex Emulsionen zu Erhöhung der Elastizität der hydraulisch abbindenden Zementmischung handeln. Darüber hinaus wirken erfindungsgemäße verwendete Emulsionen ebenfalls vorteilhaft hydrophobierend und korrosionsinhibierend, letzteres insbesondere in Stahlbeton.

Die Erfindung wird anhand der folgenden Beispiele näher erläutert, ohne den Gegenstand der vorliegenden Erfindung zu beschränken.

### Beispiele

### Beispiel 1 (Vergleichsemulsion ohne Propylethoxysilanoligomer)

Herstellung der Emulsion ausgehend von:
49,0 kg VE-Wasser,
49,0 kg n-Octyltriethoxysilan (Dynasylan® OCTEO, Evonik)
0,96 kg siliciumfunktioneller Emulgator Typ A (Evonik),
0,64 kg Sulfopon 101 (BASF),
0,1 kg Konservierungsmittel CIT/MIT *),
0,08 kg NaHCO₃

Dazu wurde VE-Wasser vorgelegt und die löslichen Bestandteile der Zusammensetzung während 5 bis 10 Minuten unter Rühren gelöst und dann das Octyltriethoxysilan eingemischt. Anschließend erfolgte über 25 Minuten (bis 150 bar) Emulgierung in einem Hochdruck-Homogenisator (Einstellung Kryomat auf +3°C).
^{*)} CIT = Chlormethylisothiazolinon; MIT = Methylisothiazolinon

### Beispiel 2 (Emulsion zur erfindungsgemäßen Verwendung)

Herstellung der Grundmischung 1 durch:

| | |
|---|---|
| Vorlage VE-Wasser | 200,0 g, |
| Zugabe Sulfopon 101 (BASF) | 9,0 g, |
| Lutensol TO 5 (BASF) | 28,0 g, |
| Acticide RS (Fa. Thor) | 2,6 g, |
| NaHCO₃ | 1,4 g |

und intensives Mischen über 10 bis 15 Minuten.

Die Grundmischung 1 wurde in einen Hochdruckhomogenisator überführt und 759,0 g VE-Wasser, 750,0 g n-Propylethoxysilanoligomer (nachfolgend auch als "PTEO-Oligomer" bezeichnet, hergestellt gemäß Beispiel 1 aus EP1205505), 250,0 g n-Octyltriethoxysilan (Dynasylan® OCTEO) und 10,0 g N,N-Diethyl-2-aminoethanol zugegeben, anschließend wurde unter Rühren (284 U/min) über 35 Minuten vorgemischt und über 7 Minuten (bis 160 bar) emulgiert. Der Kryomat war dabei auf +3°C eingestellt.

### Beispiel 3 (Emulsion zur erfindungsgemäßen Verwendung)

Herstellung der Grundmischung 2 durch:

| | |
|---|---|
| Vorlage VE-Wasser | 200,0 g, |
| Zugabe Sulfopon 101 (BASF) | 9,0 g, |
| Lutensol TO 5 (BASF) | 28,0 g, |
| Acticide RS (Fa. Thor) | 2,6 g, |
| NaHCO₃ | 1,4 g |

und intensives Mischen über 10 bis 15 Minuten.

Die Grundmischung 2 wurde in einen Hochdruckhomogenisator überführt und 759,0 g VE-Wasser, 500,0 g n-Propylethoxysilanoligomer (hergestellt gemäß Beispiel 1 aus EP1205505), 500,0 g n-Octyltriethoxysilan (Dynasylan® OCTEO) und 10,0 g N,N-Diethyl-2-aminoethanol zugegeben, anschließend wurde unter Rühren (284 U/min) über 33 Minuten vorgemischt und über 9 Minuten (bis 150 bar) emulgiert. Der Kryomat war dabei auf +3°C eingestellt.

### Beispiel 4 (Emulsion zur erfindungsgemäßen Verwendung)

Herstellung der Grundmischung 2 durch:

| | |
|---|---|
| Vorlage VE-Wasser | 200,0 g, |
| Zugabe Sulfopon 101 (BASF) | 9,0 g, |
| Lutensol TO 5 (BASF) | 28,0 g, |
| Acticide RS (Fa. Thor) | 2,6 g, |
| NaHCO₃ | 1,4 g |

und intensives Mischen über 10 bis 15 Minuten.

Die Grundmischung 3 wurde in einen Hochdruckhomogenisator überführt und 759,0 g VE-Wasser, 250,0 g n-Propylethoxysilanoligomer (hergestellt gemäß Beispiel 1 aus EP1205505), 750,0 g n-Octyltriethoxysilan (Dynasylan® OCTEO) und 10,0 g N,N-Diethyl-2-aminoethanol zugegeben, anschließend wurde unter Rühren (284 U/min) über 38 Minuten vorgemischt und über 5 Minuten (bis 150 bar) emulgiert. Der Kryomat war dabei auf +3°C eingestellt.

### Beispiel 5 (Emulsion zur erfindungsgemäßen Verwendung)

Zunächst Herstellung der Basis-Emulsion ausgehend von:
48,1 kg VE-Wasser,
49,2 kg n-Propylethoxysilanoligomer, gemäß Beispiel 1 aus EP1205505,
0,96 kg siliciumfunktioneller Emulgator Typ A (Evonik),
0,64 kg Sulfopon 101 (BASF),
0,1 kg Konservierungsmittel CIT/MIT,
0,08 kg NaHCO₃

Dazu wurde VE-Wasser vorgelegt und die löslichen Bestandteile der Zusammensetzung während 5 bis 10 Minuten unter Rühren gelöst und dann das n-Propylethoxysilanoligomer und 0,49 kg N,N-Diethyl-2-aminoethanol eingemischt. Anschließend erfolgte über 25 Minuten (bis 150 bar) Emulgierung in einem Hochdruck-Homogenisator (Einstellung Kryomat auf +3°C).

### Beispiel 6 (vergleichende Beispiele zum Schwundverhalten in Normmörtel)

Das Schwundverhalten in so genanntem Normmörtel gemäß EN 196 wurde nach
DIN EN 52450 (1985-08, verwendetes Meßgerät B) hier vergleichend untersucht. Dazu wurden Normmörtel (Wasser/Zementfaktor konstant bei 0,5) normgerecht hergestellt, wobei die Emulsionen aus den oben angeführten Beispielen 1 bis 5 zum Einsatz kamen und bei Emulsionhaltigem Normmörtel die Einsatzmenge an Emulsion jeweils 3,0 Gew.-%, bezogen auf die Zementmenge, betrug. Die Schwundwerte wurden nach 1, 4, 14 und nach 28 Tagen bestimmt und sind aus Tabelle 1 zu entnehmen.

**Tabelle 1: Untersuchungsergebnisse zum Schwundverhalten im EN 196 Normmörtel nach DIN EN 52450 (OCTEO = Octyltriethoxysilan; "PTEO-Oligomer" = n-Propylethoxysilanoligomer; DEAE = N, N-Diethyl-2-aminoethanol)**

| **Zusammensetzung bzgl. Normmörtel** | **Schwundwerte in [mm/m]** | | | |
|---|---|---|---|---|
| | **nach** | **nach** | **nach** | **nach** |
| | **1 Tag** | **4 Tagen** | **14 Tagen** | **28 Tagen** |
| **Referenz** | -0,05 | -0,27 | -0,60 | -0,75 |
| (ohne Emulsion) | | | | |
| (Vergleichs-)**Beispiel 1** | -0,13 | -0,29 | -0,66 | -0,78 |
| (Emulsion mit OCTEO, ohne "PTEO-Oligomer", ohne DEAE) | | | | |
| **Beispiel 2** | -0,01 | -0,16 | -0,49 | -0,66 |
| (Emulsion mit OCTEO und "PTEO-Oligomer", Verhältnis 1 : 3, mit DEAE) | | | | |
| **Beispiel 3** | -0,03 | -0,21 | -0,59 | -0,70 |
| (Emulsion mit OCTEO und "PTEO-Oligomer", Verhältnis 1 : 1, mit DEAE) | | | | |
| **Beispiel 4** | -0,05 | -0,18 | -0,57 | -0,68 |
| (Emulsion mit OCTEO und "PTEO-Oligomer", Verhältnis 3 : 1, mit DEAE) | | | | |
| **Beispiel 5** | -0,05 | -0,24 | -0,55 | -0,62 |
| (Emulsion mit "PTEO-Oligomer", mit DEAE) | | | | |

### Zusammenfassung der Ergebnisse aus den anwendungstechnischen Untersuchungen:

Die Anwendungsversuche zeigen, dass der Zusatz einer wässrigen Emulsion, die auf einem Propyl-/Alkoxy-Silanoligomer und N,N-Diethyl-2-aminoethanol basiert, in so genanntem Normmörtel zu einer deutlichen Schwundminderung führt, vgl. die Schwundwerte bzgl. Beispiel 5 gegenüber den Referenzwerten.

Auch kann Propyl-/Alkoxy-Silanoligomer in der Ölphase einer solchen Emulsion anteilig durch ein preisgünstigeres monomeres Alkylalkoxysilan vorteilhaft ersetzt werden, vgl. die Beispiele 2, 3 und 4 gegenüber den Referenzwerten.

Demgegenüber bewirken wässige Emulsionen, die hinsichtlich der Ölphase ausschließlich auf einem rein monomeren Alkylalkoxysilan beruhen, bei Applikation in Normmörtel keine Schwundminderung, vgl. (Vergleichs-)Beispiel 1 gegenüber den Referenzwerten und den erfindungsgemäßen Anwendungen.

## Patentansprüche

1. Verwendung einer wässrigen Emulsion,
die ein Propylethoxysilanoligomeren-Gemisch oder ein Gemisch aus einem Propylethoxysilanoligomeren-Gemisch und Octyltriethoxysilan in einem Gewichtsverhältnis von 3 zu 1 bis 1 zu 3, mindestens einen Emulgator oder ein Emulgatorsystem, mindestens einen Gehalt an einem 2-Aminoethanol und Wasser enthält,
als Zusatz bei der Herstellung von hydraulisch abbindenden Zementmischungen zur Minderung des Schwundverhaltens.

2. Verwendung nach Anspruch 1,
**dadurch gekennzeichnet,**
**dass** die Emulsion einen Gehalt an Propylethoxysilanoligomeren-Gemisch von 20 bis 85 Gew.-%, bezogen auf das Gesamtgewicht der Emulsion, aufweist, wobei die Ölphase in Summe 40 bis 85 Gew.-%, vorzugsweise 41 bis 82 Gew.-%, bezogen auf das Gesamtgewicht der Emulsion, beträgt.

3. Verwendung nach Anspruch 1 oder 2,
**dadurch gekennzeichnet,**
**dass** das Propylethoxysilanoligomeren-Gemisch Oligomere der Formel (I) 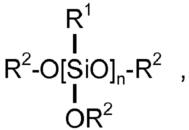 enthält und die Gruppen R¹ unabhängig voneinander für n- sowie i-Propyl und die Gruppen R² für Ethyl stehen und n den Oligomerisierungsgrad als mit 2 bis 20 bestimmt.

4. Verwendung nach einem der Ansprüche 1 bis 3,
**dadurch gekennzeichnet,**
**dass** die Emulsion 0,1 bis 1 Gew.-%, vorzugsweise 0,25 bis 0,75 Gew.-%, bezogen auf Gesamtgewicht der Emulsion, mindestens ein 2-Aminoethanol der allgemeinen Formel (II)
HO-CH₂-CH₂-NR³₂ (II),
worin Gruppen R³ gleich oder verschieden sind und unabhängig voneinander für Wasserstoff, Methyl sowie Ethyl stehen,
enthält.

5. Verwendung nach einem der Ansprüche 1 bis 4,
**dadurch gekennzeichnet,**
**dass** das 2-Aminoethanol in der Emulsion N,N-Diethyl-2-aminoethanol ist.

6. Verwendung nach einem der Ansprüche 1 bis 5,
**dadurch gekennzeichnet,**
**dass** die Emulsion einen pH-Wert von 8 bis 12 aufweist

7. Verwendung nach einem der Ansprüche 1 bis 6,
**dadurch gekennzeichnet,**
**dass** die Emulsion mindestens einen weiteren Zusatzstoff enthält ausgewählt aus der Reihe Konservierungsmittel, wie CIT bzw. MIT, Antikorrosionshilfsmittel, Abperlhilfsmittel, wie reaktives Siloxanharz bzw. Organopolysiloxan, Rheologiehilfsmittel, Natriumhydrogencarbonat.

8. Verwendung nach einem der Ansprüche 1 bis 7,
**dadurch gekennzeichnet,**
**dass** der Emulgator oder das Emulgatorsystem, welches auf mindestens zwei der nachfolgenden Emulgatoren beruht, ausgewählt ist aus Alkylsulfaten mit C₈-C₁₈-Alkyl, Alkyl- und Alkarylethersulfaten mit C₈-C₁₈-Alkyl im hydrophoben Rest und mit 1 bis 40 Ethylenoxid (EO)- bzw. Propylenoxid (PO)-Einheiten Alkylsulfonate mit C₈-C₁₈-Alkyl, Natriumlaurylsulfat (C₁₂-C₁₆), Alkarylsulfonate mit C₈-C₁₈-Alkyl, ist und Halbester der Sulfobernsteinsäure mit einwertigen Alkoholen oder Alkylphenolen mit 5 bis 15 Kohlenstoffatomen, Alkali- und Ammoniumsalze von Carbonsäuren mit 8 bis 20 Kohlenstoffatomen im Alkyl-, Aryl-, Alkaryl- oder Aralkylrest, Alkyl- und Alkarylphosphate mit 8 bis 20 Kohlenstoffatomen im organischen Rest, Alkylether- bzw. Alkaryletherphosphate mit 8 bis 20 Kohlenstoffatomen im Alkyl- bzw. Alkarylrest und 1 bis 40 EO-Einheiten, Alkylpolyglykolether und Alkarylpolyglykolether mit 8 bis 40 EO-Einheiten und C₈-C₂₀-Kohlenstoffatomen in den Alkyl- oder Arylresten, Ethylenoxid/Propylenoxid (EO/PO)-Blockcopolymer mit 8 bis 40 EO- bzw. PO-Einheiten, Additionsprodukte von Alkylaminen mit C₈-C₂₂-Alkylresten mit Ethylenoxid oder Propylenoxid, Alkylpolyglykoside mit linearen oder verzweigten gesättigten oder ungesättigten C₈-C₂₄-Alkylresten und Oligoglykosidresten mit 1 bis 10 Hexose- oder Pentoseeinheiten, siliciumfunktionelle Tenside oder Mischungen aus zwei oder mehr als zwei dieser Emulgatoren.

9. Verwendung nach einem der Ansprüche 1 bis 8,
**dadurch gekennzeichnet,**
**dass** der Emulgator bzw. das Emulgatorsystem ein Gemisch aus mindestens einem anionischen und mindestens einem nichtionischen Emulgator in einer Menge von 0,02 bis 3 Gew.-%, bezogen auf Gesamtgewicht der Emulsion, vorhanden ist.

10. Verwendung nach einem der Ansprüche 1 bis 9,
**dadurch gekennzeichnet,**
**dass** man die Emulsion zu 0,1 bis 5 Gew.-%, bezogen auf die in der Zementmischung enthaltene Zementmenge, einsetzt.

11. Verwendung nach einem der Ansprüche 1 bis 10,
**dadurch gekennzeichnet,**
**dass** die hydraulisch abbindende Zementmischung ein Mörtel, ein Estrich oder ein Beton ist.

## Claims

1. Use of an aqueous emulsion
containing a propylethoxysilane oligomer mixture or a mixture of a propylethoxysilane oligomer mixture and octyltriethoxysilane in a weight ratio of 3:1 to 1:3, at least one emulsifier or an emulsifier system, at least one content of a 2-aminoethanol and water as an addition in the production of hydraulically setting cement mixtures for reduction of shrinkage characteristics.

2. Use according to Claim 1,
**characterized in that**
the emulsion has a content of propylethoxysilane oligomer mixture of 20% to 85% by weight, based on the total weight of the emulsion, where the oil phase totals 40% to 85% by weight, preferably 41% to 82% by weight, based on the total weight of the emulsion.

3. Use according to Claim 1 or 2,
**characterized in that**
the propylethoxysilane oligomer mixture contains oligomers of the formula (I) 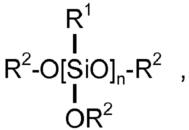 and the R¹ groups are independently n- and i-propyl and the R² groups are ethyl and n determines the oligomerization level at 2 to 20.

4. Use according to any of Claims 1 to 3,
**characterized in that**
the emulsion contains 0.1% to 1% by weight, preferably 0.25% to 0.75% by weight, based on the total weight of the emulsion, of at least one 2-aminoethanol of the general formula (II)
HO-CH₂-CH₂-NR³₂ (II)
in which R³ groups are the same or different and are independently hydrogen, methyl and ethyl.

5. Use according to any of Claims 1 to 4, **characterized in that**
the 2-aminoethanol in the emulsion is N,N-diethyl-2-aminoethanol.

6. Use according to any of Claims 1 to 5,
**characterized in that**
the emulsion has a pH of 8 to 12.

7. Use according to any of Claims 1 to 6,
**characterized in that**
the emulsion comprises at least one further additive selected from the group of preservatives, such as CIT or MIT, anticorrosion aids, drip-off aids, such as reactive siloxane resin or organopolysiloxanes, rheology aids, sodium hydrogencarbonate.

8. Use according to any of Claims 1 to 7,
**characterized in that**
the emulsifier or the emulsifier system which is based on at least two of the emulsifiers which follow is selected from alkyl sulphates having C₈-C₁₈-alkyl, alkyl ether sulphates and alkaryl ether sulphates having C₈-C₁₈-alkyl in the hydrophobic radical and having 1 to 40 ethylene oxide (EO) and/or propylene oxide (PO) units, alkylsulphonates having C₈-C₁₈-alkyl, sodium laurylsulphate (C₁₂-C₁₆), alkarylsulphonates having C₈-C₁₈-alkyl, and monoesters of sulphosuccinic acid with monohydric alcohols or alkylphenols having 5 to 15 carbon atoms, alkali metal and ammonium salts of carboxylic acids having 8 to 20 carbon atoms in the alkyl, aryl, alkaryl or aralkyl radical, alkyl and alkaryl phosphates having 8 to 20 carbon atoms in the organic radical, alkyl ether or alkaryl ether phosphates having 8 to 20 carbon atoms in the alkyl or alkaryl radical and 1 to 40 EO units, alkyl polyglycol ethers and alkaryl polyglycol ethers having 8 to 40 EO units and C₈-C₂₀ carbon atoms in the alkyl or aryl radicals, ethylene oxide/propylene oxide (EO/PO) block copolymer having 8 to 40 EO and/or PO units, addition products of alkylamines having C₈-C₂₂-alkyl radicals with ethylene oxide or propylene oxide, alkyl polyglycosides having linear or branched, saturated or unsaturated C₈-C₂₄-alkyl radicals and oligoglycoside radicals having 1 to 10 hexose or pentose units, silicon-functional surfactants or mixtures of two or more of these emulsifiers.

9. Use according to any of Claims 1 to 8,
**characterized in that**
the emulsifier or emulsifier system a mixture of at least one anionic emulsifier and at least one nonionic emulsifier is present in an amount of 0.02% to 3% by weight, based on the total weight of the emulsion.

10. Use according to any of Claims 1 to 9,
**characterized in that**
the emulsion is used to an extent of 0.1% to 5% by weight, based on the amount of cement present in the cement mixture.

11. Use according to any of Claims 1 to 10,
**characterized in that**
the hydraulically setting cement mixture is a mortar, screed or concrete.

## Revendications

1. Utilisation d'une émulsion aqueuse, qui contient un mélange d'oligomères de propyléthoxysilane ou un mélange d'un mélange d'oligomères de propyléthoxysilane et d'octyltriéthoxysilane en un rapport en poids de 3 sur 1 à 1 sur 3, au moins un émulsifiant ou un système d'émulsifiant, au moins une teneur en un 2-aminoéthanol et de l'eau,
en tant qu'additif lors de la fabrication de mélanges de ciment à prise hydraulique pour la réduction du comportement de retrait.

2. Utilisation selon la revendication 1, **caractérisée en ce que** l'émulsion présente une teneur en mélange d'oligomères de propyléthoxysilane de 20 à 85 % en poids, par rapport au poids total de l'émulsion, la phase huileuse étant au total de 40 à 85 % en poids, de préférence de 41 à 82 % en poids, par rapport au poids total de l'émulsion.

3. Utilisation selon la revendication 1 ou 2, **caractérisée en ce que** le mélange d'oligomères de propyléthoxysilane contient des oligomères de formule (I) 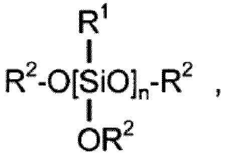 et les groupes R¹ représentent indépendamment les uns des autres n- et i-propyle, et les groupes R² représentent éthyle, et n détermine le degré d'oligomérisation de 2 à 20.

4. Utilisation selon l'une quelconque des revendications 1 à 3, **caractérisée en ce que** l'émulsion contient 0,1 à 1 % en poids, de préférence 0,25 à 0,75 % en poids, par rapport au poids total de l'émulsion, d'au moins un 2-aminoéthanol de formule générale (II)
HO-CH₂-CH₂-NR³₂ (II)
dans laquelle les groupes R³ sont identiques ou différents, et représentent indépendamment l'un de l'autre hydrogène, méthyle et éthyle.

5. Utilisation selon l'une quelconque des revendications 1 à 4, **caractérisée en ce que** le 2-aminoéthanol dans l'émulsion est le N,N-diéthyl-2-aminoéthanol.

6. Utilisation selon l'une quelconque des revendications 1 à 5, **caractérisée en ce que** l'émulsion présente un pH de 8 à 12.

7. Utilisation selon l'une quelconque des revendications 1 à 6, **caractérisée en ce que** l'émulsion contient au moins un additif supplémentaire choisi dans la série constituée par les conservateurs, tels que la CIT ou la MIT, les adjuvants anticorrosion, les adjuvants de déperlance, tels qu'une résine de siloxane réactive ou un organopolysiloxane, les adjuvants de rhéologie, l'hydrogénocarbonate de sodium.

8. Utilisation selon l'une quelconque des revendications 1 à 7, **caractérisée en ce que** l'émulsifiant ou le système d'émulsifiant, qui est à base d'au moins deux des émulsifiants suivants, est choisi parmi les alkylsulfates contenant un alkyle en C₈-C₁₈, les alkyl- et alkaryléther-sulfates contenant un alkyle en C₈-C₁₈ dans le radical hydrophobe et contenant 1 à 40 unités oxyde d'éthylène (EO) ou oxyde de propylène (PO), les alkylsulfonates contenant un alkyle en C₈-C₁₈, le laurylsulfate de sodium (C₁₂-C₁₆), les alkarylsulfonates contenant un alkyle en C₈-C₁₈, et les semi-esters de l'acide sulfosuccinique avec des alcools monovalents ou des alkylphénols de 5 à 15 atomes de carbone, les sels d'alcalis et d'ammonium d'acides carboxyliques contenant 8 à 20 atomes de carbone dans le radical alkyle, aryle, alkaryle ou aralkyle, les alkyl- et alkarylphosphates contenant 8 à 20 atomes de carbone dans le radical organique, les alkyléther- ou alkaryléther-phosphates contenant 8 à 20 atomes de carbone dans le radical alkyle ou alkaryle et 1 à 40 unités EO, les éthers d'alkylpolyglycol et les éthers d'alkarylpolyglycol contenant 8 à 40 unités EO et des atomes de carbone en C₈-C₂₀ dans les radicaux alkyle ou aryle, les copolymères séquencés d'oxyde d'éthylène/oxyde de propylène (EO/PO) contenant 8 à 40 unités EO ou PO, les produits d'addition d'alkylamines contenant des radicaux alkyle en C₈-C₂₂ avec de l'oxyde d'éthylène ou de l'oxyde de propylène, les alkylpolyglycosides contenant des radicaux alkyle en C₈-C₂₄ linéaires ou ramifiés, saturés ou insaturés, et des radicaux oligoglycoside contenant 1 à 10 unités hexose ou pentose, les tensioactifs à fonction silicium ou les mélanges de deux ou plus de deux de ces émulsifiants.

9. Utilisation selon l'une quelconque des revendications 1 à 8, **caractérisée en ce que** l'émulsifiant ou le système d'émulsifiant un mélange d'au moins un émulsifiant anionique et d'au moins un émulsifiant non ionique est présent en une quantité de 0,02 à 3 % en poids, par rapport au poids total de l'émulsion.

10. Utilisation selon l'une quelconque des revendications 1 à 9, **caractérisée en ce que** l'émulsion est utilisée à hauteur de 0,1 à 5 % en poids, par rapport à la quantité de ciment contenue dans le mélange de ciment.

11. Utilisation selon l'une quelconque des revendications 1 à 10, **caractérisée en ce que** le mélange de ciment à prise hydraulique est un mortier, un enduit ou un béton.
